# EUROPEAN PATENT APPLICATION

(11) **EP 4 625 078 A1**
(43) Date of publication of application: **01.10.2025**
(21) Application number: 24166219.6
(22) Date of filing: 26.03.2024
(51) Int. Cl.: G05B 19/418, H04L 12/40

(54) **FIELDBUS CONNECTIVITY SERVICES**

(71) Applicant: ABB SCHWEIZ AG, 5400 Baden (CH)
(72) Inventor: MA, Jijun, Gongshu, 310000 (CN); HONG, Tina-TingTing, Shangcheng District, Hangzhou, 310000 (CN); POOK, Stefan, 32423 Minden (DE); WANG, ji, Yuhang District, 310000 (CN); KEUL, Thomas, 63579 Freigericht (DE); BEBERNIK, Arthur, 31675 Bueckeburg (DE)
(74) Representative: Maiwald GmbH

(57) **Abstract**

There is provided a method of providing fieldbus connectivity. The method comprises, by a network device for an industrial automation system:
obtaining fieldbus connectivity requirements specifying a required fieldbus protocol type using which the network device is to communicate;
loading, from a library, a fieldbus connectivity service, wherein the fieldbus connectivity service comprises fieldbus stack software and a fieldbus stack hardware configuration for implementing a protocol stack which conforms to the required fieldbus protocol type;
using the fieldbus stack hardware configuration to carry out partial reconfiguration of a flexible fieldbus communications interface, wherein the flexible fieldbus communications interface comprises a portion which remains unaltered during the partial reconfiguration;
binding the fieldbus stack software to a portion of the flexible fieldbus communications interface that was partially reconfigured using the fieldbus stack hardware configuration; and
using the protocol stack which conforms to the required fieldbus protocol type to provide fieldbus connectivity at the network device.

## Description

### FIELD OF THE INVENTION

The invention relates to devices and methods for providing fieldbus connectivity services.

### BACKGROUND

Industrial automation systems typically use a distributed control system (DCS) in which at least one fieldbus links controllers to field devices comprising plant equipment and instrumentation such as sensors, actuators, valves, and so on. As automation systems become more complex and fieldbus standards proliferate, production of fieldbus-enabled devices in a cost-effective manner becomes more desirable.

### SUMMARY

To better address one or more of these concerns, there is provided, in a first aspect of the invention, a method of providing fieldbus connectivity, the method comprising, by a network device for an industrial automation system:
obtaining fieldbus connectivity requirements specifying a required fieldbus protocol type using which the network device is to communicate;
loading, from a library, a fieldbus connectivity service, wherein the fieldbus connectivity service comprises fieldbus stack software and a fieldbus stack hardware configuration for implementing a protocol stack which conforms to the required fieldbus protocol type;
using the fieldbus stack hardware configuration to carry out partial reconfiguration of a flexible fieldbus communications interface, wherein the flexible fieldbus communications interface comprises a portion which remains unaltered during the partial reconfiguration;
binding the fieldbus stack software to a portion of the flexible fieldbus communications interface that was partially reconfigured using the fieldbus stack hardware configuration; and
using the protocol stack which conforms to the required fieldbus protocol type to provide fieldbus connectivity at the network device.

Partial reconfiguration carried out in this way permits the use of a hardware configuration which is smaller than that which would otherwise be necessary if the flexible fieldbus communications interface were to be entirely reconfigured for implementing the required protocol stack, thereby expediting the reconfiguration. Stated differently, adapting the flexible fieldbus communications interface according to changing requirements requires only a partial reconfiguration and not a full reconfiguration of the interface.

The portion of the flexible fieldbus communications interface which remains unaltered during the partial reconfiguration may be referred to as a static portion. The static portion may be (pre-)programmed to carry out tasks which are common to fieldbus connectivity services conforming to different fieldbus protocol types. These protocol-agnostic tasks may comprise one or more of: a diagnostics task; a communications interface task; a support task for supporting the portion which is partially reconfigured; a general administration task. By "static" is meant that the portion may not be reconfigured or adapted during runtime. The static portion may be programmed during a boot up process, for example while the flexible fieldbus communications interface is in a reset state. The method may further comprise programming the static portion of the flexible fieldbus communications interface.

The portion of the flexible fieldbus communications interface which is reconfigured during partial reconfiguration may be referred to as a reconfigurable portion or a dynamic portion. By "dynamic" is meant that the portion may be reconfigured during runtime.

The flexible fieldbus communications interface may comprise a plurality of reconfigurable portions. In this case, the portion which is reconfigured during the partial reconfiguration may be referred to as a first reconfigurable portion, while the fieldbus connectivity service is a first fieldbus connectivity service. In this case, the method may further comprise programming a second one of the reconfigurable portions of the flexible fieldbus communications interface to provide a second service independently of the (first) fieldbus connectivity service. The second reconfigurable portion may be reconfigured during the same partial reconfiguration process as the first reconfigurable portion. The second reconfigurable portion may be used to provide fieldbus connectivity conforming to a protocol type which may be the same as, or different from, the first required fieldbus protocol type. The second required fieldbus protocol type may also be specified in the fieldbus connectivity requirements. Alternatively, the second reconfigurable portion may be reconfigured for carrying out a service which is unrelated to fieldbus connectivity, or which is related to a fieldbus connectivity in a protocol-agnostic manner.

For example, the second service may comprise a second fieldbus connectivity service, whereby the network device provides multiple independent fieldbus connectivity services. The multiple fieldbus connectivity services may conform to the same fieldbus protocol type. The multiple fieldbus connectivity services may conform to different fieldbus protocol types.

The second service may execute one or more compute tasks. The compute tasks may be related to the fieldbus stack software of the fieldbus connectivity service. In this way, the fieldbus stack compute tasks may be executed in hardware rather than software for expedited processing.

In any case, partial reconfiguration as described herein permits configuration of a reconfigurable portion of the flexible fieldbus communications interface independently of the static portion and independently of any other reconfigurable portion. That is, partial reconfiguration of the flexible fieldbus communications interface performed in relation to at least one reconfigurable portion thereof does not impact the function of a static portion thereof or any other reconfigurable portion thereof.

The library may store a plurality of fieldbus connectivity services conforming to different fieldbus protocol types. The fieldbus stack hardware configuration may comprise a programming stream for programming one of the reconfigurable portions of the flexible fieldbus communications interface. The programming stream may define fieldbus protocol logic to be executed by the flexible fieldbus communications interface. The programming stream may comprise a bitstream, for example.

The method may further comprise:
obtaining updated fieldbus connectivity requirements specifying a replacement fieldbus protocol type which is different to the previously required fieldbus protocol type;
loading, from the library, a replacement fieldbus connectivity service which conforms to the replacement fieldbus protocol type;
using a hardware configuration of the replacement fieldbus connectivity service to carry out partial reconfiguration of the flexible fieldbus communications interface;
binding fieldbus stack software of the replacement fieldbus connectivity service to a portion of the flexible fieldbus communications interface that was partially reconfigured using the replacement fieldbus stack hardware configuration; and
using the protocol stack which conforms to the replacement fieldbus protocol type to provide fieldbus connectivity at the network device.

In an example, the network device provides fieldbus connectivity according to the replacement fieldbus protocol type using the same ports which were used to provide fieldbus connectivity according to the previously required fieldbus protocol type.

The flexible fieldbus communications interface may be operable to host a plurality of fieldbus instances, wherein each fieldbus instance is associated with a respective fieldbus connectivity service. Stated differently, the flexible fieldbus communications interface may be operable to host a second fieldbus instance alongside a first fieldbus instance, wherein the first fieldbus instance is associated with a first fieldbus connectivity service and wherein the second fieldbus instance is associated with a second fieldbus connectivity service. The plurality of fieldbus connectivity services may conform to the same fieldbus protocol type or to different fieldbus protocol types. In the latter case, the network device is able to support multiple heterogeneous fieldbus protocol types.

The network device may be operable, in response to obtaining the updated fieldbus connectivity requirements, to reconfigure the flexible fieldbus communications interface to host a fieldbus instance associated with the replacement fieldbus connectivity service for supporting the replacement fieldbus protocol type. Stated differently, the network device may be operable to swap fieldbus instances in, and to swap fieldbus instances out, according to the updated fieldbus connectivity requirements. Swapping out fieldbus instances which are no longer required according to the updated fieldbus connectivity requirements may be performed to conserve resources.

The fieldbus connectivity requirements may be obtained for example from an engineering server, for example as part of a required interface configuration. The required interface configuration may also identify the reconfigurable portion of the flexible fieldbus communications interface which is to be configured.

In this way, the network device provides hardware-reconfigurable fieldbus connectivity services to improve flexibility and performance. The connectivity services may comprise one or more of a PROFIBUS connectivity service, a MODBUS RTU connectivity service, a PROFINET connectivity service, a MODBUS TCP connectivity service, and an IEC 61850 connectivity service, for example.

The network device utilizes the fieldbus protocol stack to send signals to, and receive signals from, at least one field device via at least one fieldbus network. The network device may be operable to utilize a plurality of fieldbus protocol stacks corresponding to respective fieldbus protocol types.

Each fieldbus instance may comprise fieldbus protocol logic, for example register transfer level logic, which is used to configure the flexible fieldbus communications interface according to the respective fieldbus connectivity service.

The network device may comprise a loader which is operable to reconfigure the flexible fieldbus communications interface by loading a fieldbus connectivity service from the library and downloading the hardware configuration to the flexible fieldbus communications interface to be hosted as a fieldbus instance. The loader may be operable to load the fieldbus connectivity service from the library based on a configure instruction issued for example by a connectivity service main application running on the network device.

In one particular example, the network device further comprises a fieldbus task monitor operable to identify at least one compute-intensive task being executed by at least one fieldbus protocol stack, wherein the controller is operable to offload the at least one compute-intensive task to the flexible fieldbus communications interface.

Offloading the at least one compute-intensive task to the flexible fieldbus communications interface may comprise loading a pre-compiled hardware configuration corresponding to the at least one compute-intensive task from the library and downloading the pre-compiled hardware configuration to the flexible fieldbus communications interface.

In this way, provided is a mechanism for dynamically swapping in and swapping out compute-intensive (fieldbus protocol) tasks from the (e.g. software-implemented) fieldbus protocol stack to the reconfigurable hardware.

The method may further comprise the step of utilizing the fieldbus connectivity to communicate with at least one further network device for the purpose of controlling the industrial automation system to carry out a production process.

The method of the first aspect may be computer implemented. Optional features of the first aspect may form part of any further aspect, mutatis mutandis.

According to a second aspect, there is provided a network device for an industrial automation system, the network device being configured to perform the method of providing fieldbus connectivity according to the first aspect. The network device may be any device which can be connected to a network, especially to a fieldbus network, such as a network switch, a controller, a remote I/O, a field device, or an engineering tool, for example.

According to a third aspect, there is provided a process control system comprising the network device of the second aspect.

According to a fourth aspect, there is provided an industrial automation system comprising the network device of the second aspect and/or the process control system of the third aspect.

According to a fifth aspect, there is provided a computer program (product) comprising instructions which, when executed by a computing system, enable or cause the computing system to perform the method of the first aspect.

According to a sixth aspect, there is provided a computer-readable (storage) medium comprising instructions which, when executed by a computing system, enable or cause the computing system to perform the method of the first aspect. The computer-readable medium may be transitory or non-transitory, volatile or non-volatile.

Devices and methods described herein serve to improve the performance of fieldbus connectivity services, the flexibility of the hardware used to provide the connectivity service, and adaptation of new technology in connection with the connectivity services, thereby extending product life cycles, reducing energy consumption, enabling reuse of software and hardware, and reducing development costs.

The term "portion" as used herein may be replaced by "area" or "region", as appropriate.

By "industrial automation system" is meant a plant comprising one or more pipelines, production lines, and/or assembly lines for transforming one or more educts into a product and/or for assembling one or more components into a final product.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawings, in which:-
FIGS. 1A and 1B illustrate a process control system for controlling an industrial process;
FIG. 2A-D illustrate programming of a flexible fieldbus communications interface of the process control system of FIG. 1 to provide required fieldbus connectivity services;
FIGS. 3A and 3B illustrate the flexible fieldbus communications interface being programmed to provide multiple fieldbus connectivity services, according to the present disclosure; and
FIG. 4 depicts the flexible fieldbus communications interface being used to expedite compute tasks.

### DETAILED DESCRIPTION

The present disclosure is based on the recognition that, with fast changing technical challenges, industrial automation systems require process control systems to be provided with flexible fieldbus connectivity services to meet changing connectivity requirements and to remain up-to-date. The present disclosure therefore provides connectivity devices and methods to improve flexibility and performance of the connectivity services.

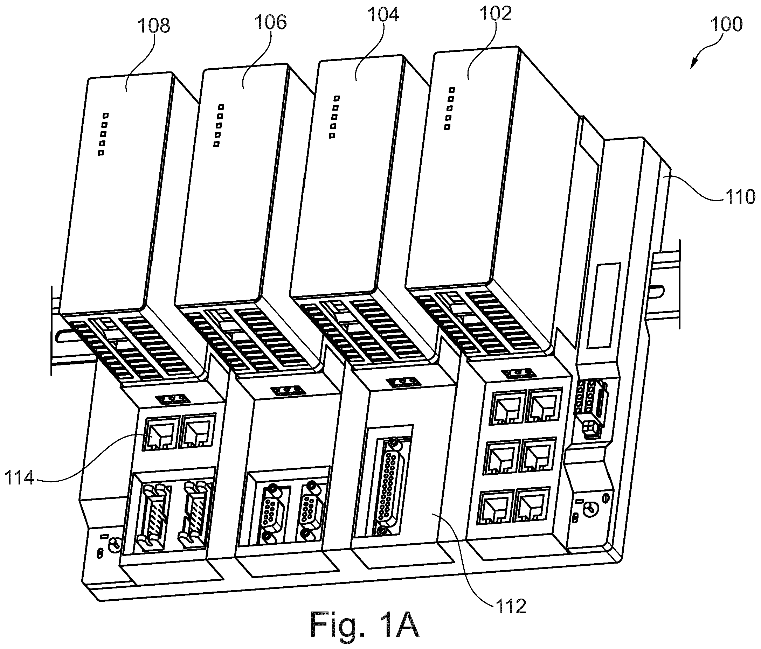

FIG. 1A illustrates a process control system 100 for controlling an industrial process carried out by an industrial automation system (not shown). The process control system 100 comprises multiple network devices 102-108 physically and communicatively coupled to one another via a mounting termination unit (MTU) 110, otherwise known as a backplane, which comprises slots for accommodating the network devices. The network device 102 is a controller 1 configured to execute a control application for controlling a production process carried out by the automation system (not shown). The network device 104 is an expansion module, otherwise known as an adapter, configured to communicate via a fieldbus network with one or more field devices. The expansion module 104 is coupled to the MTU 110 via an inlay 112, which comprises a port for connection to a fieldbus network of a particular type. Network devices having an internal controller, such as the controller 102 or the controller 108 with integral adapter, may comprise an ethernet port, such as that indicated at 114, for connection to a control network. The process control system 100 may find application in any field of industry where process automation is desired, such as energy, oil and gas, chemical, petrochemical, and so on.

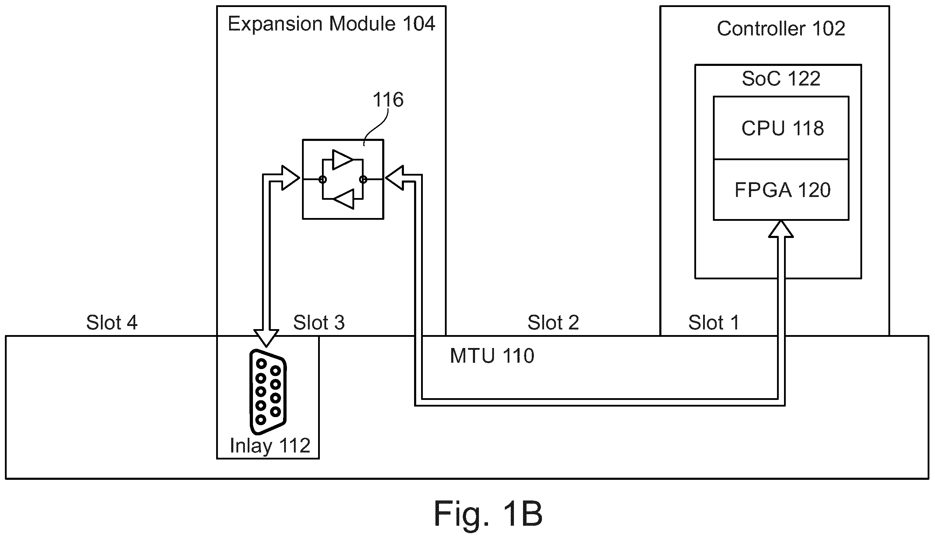

FIG. 1B schematically illustrates the controller 102 occupying slot 1 of the MTU 110 and the expansion module 104 in slot 3.

The expansion module 104 comprises a physical layer transceiver 116 configured to handle layer 1 fieldbus communications. As shown, the physical layer transceiver 116 is communicatively coupled to the controller 102 and to the inlay 112 via the MTU 110, which exchanges for example LVDS signals between the controller 102 and the expansion module 104.

The controller 102 comprises logic circuitry 118 together with a flexible fieldbus communications interface (FCI) 120. In this non-limiting example, the logic circuitry 118 and the flexible fieldbus communications interface 120 are implemented respectively using a CPU and an FPGA forming part of a system-on-chip (SoC) 122.

The logic circuitry 118 is configured to execute at least one control application for controlling equipment of the automation system to carry out a production process. The at least one control application may generate control signals for controlling plant equipment such as pumps, valves, conveyors, mixers, and heaters on the basis of input signals received from plant instrumentation and sensors. Any such equipment and instrumentation may form part of the one or more field devices with which the controller 102 communicates over the fieldbus network via the expansion module 104. The control application may comprise control logic instructing the controller 102 how to respond to input signals with appropriate control signals to maintain normal functioning of the process. In one non-limiting example, the control application conforms to the international standard IEC 61131. The logic circuitry 118 may be further configured to perform any one or more of the other operations described herein.

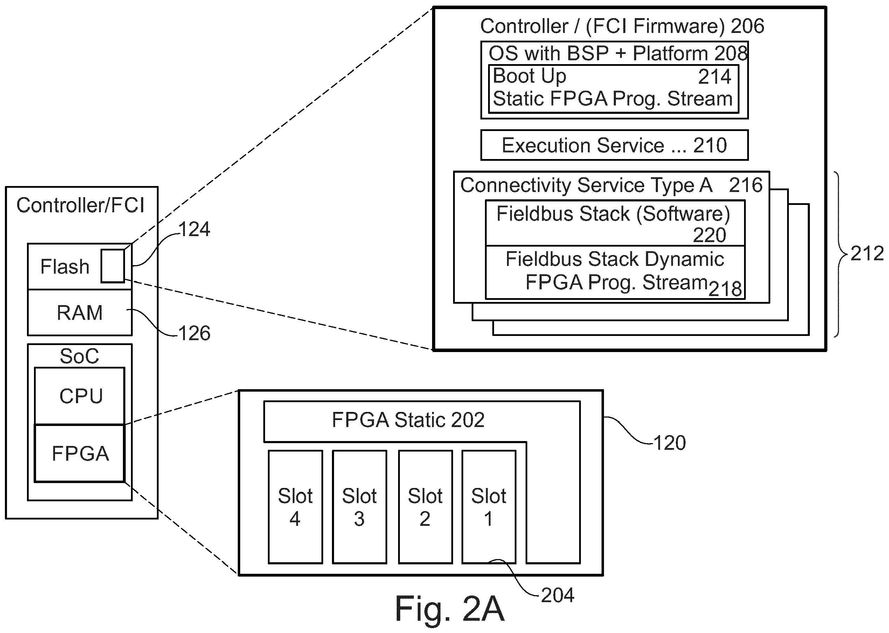

FIG. 2A illustrates the flexible fieldbus communications interface 120 in its initial state. As shown, the flexible fieldbus communications interface 120 comprises a static area 202 alongside a plurality of dynamic areas, such as that designated 204, which may be referred to as "slots".

Firmware 206 for the flexible fieldbus communications interface 120 is stored in non-volatile storage 124 of the controller 102 (in this non-limiting example, flash memory).

The firmware 206 comprises an operating system (OS) 208, an execution service 210, and a connectivity service library 212.

The OS 208 comprises a boot up programming stream 214, which is used to program the static area 202 of the flexible fieldbus communications interface 120 as part of a boot up process.

The execution service 210 provides a runtime environment for executing a connectivity service main application.

The connectivity service library 212 stores a plurality of connectivity services 216 for supporting different fieldbus protocol types. The connectivity services 216 may be different from other, with each corresponding to a respective fieldbus protocol type, such as a PROFIBUS connectivity service, MODBUS RTU connectivity service, PROFINET connectivity service, MODBUS TCP connectivity service, and/or IEC 61850 connectivity service. Each connectivity service 216 comprises a programming stream 218 for programming one of the dynamic areas 204 of the flexible fieldbus communications interface 120, together with fieldbus stack software 220, conforming to the respective fieldbus protocol type. The programming stream 218 may comprise a bitstream. The flexible fieldbus communications interface 120, when programmed using the bitstream, cooperates with the associated fieldbus stack software 220 (and the physical layer transceiver 116 of the expansion module 104) to provide fieldbus connectivity according to the particular fieldbus protocol type. Thus, connectivity services are dynamically allocated to the flexible fieldbus communications interface 120, so that the connectivity services can be hot swapped in and hot swapped out based on changing fieldbus connectivity requirements.

FIG. 2A further illustrates volatile memory 126 (in this non-limiting example, RAM) of the controller 102, which is used by the logic circuitry 118 in connection with execution of the control application.

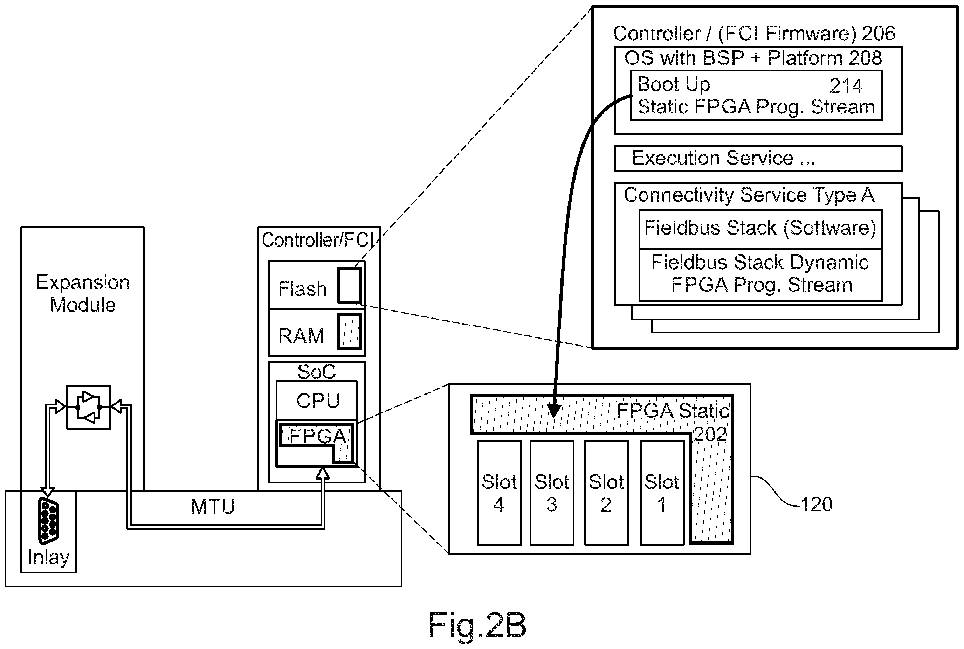

FIG. 2B illustrates the boot up programming stream 214 being used to program the static area 202 of flexible fieldbus communications interface 120 during the boot up process. The static area 202 remains unchanged thereafter, including during runtime.

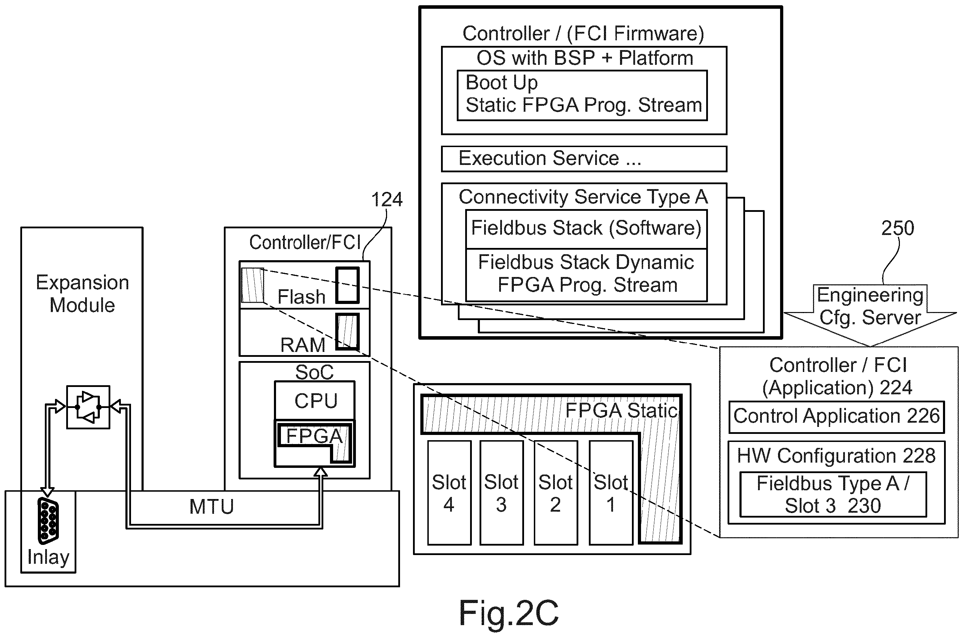

FIG. 2C illustrates upload of the control application to the non-volatile storage 124. The controller 102 receives, for example from an engineering server 250, an application package 224 comprising the control application 226 to be executed by the controller 102, together with a required interface configuration 228 (e.g., a required I/O HW configuration). The required interface configuration 228 specifies the type 230 of fieldbus protocol to be used by the controller 102, and optionally also the slot of the flexible fieldbus communications interface 120 which is to be configured to implement that fieldbus protocol type.

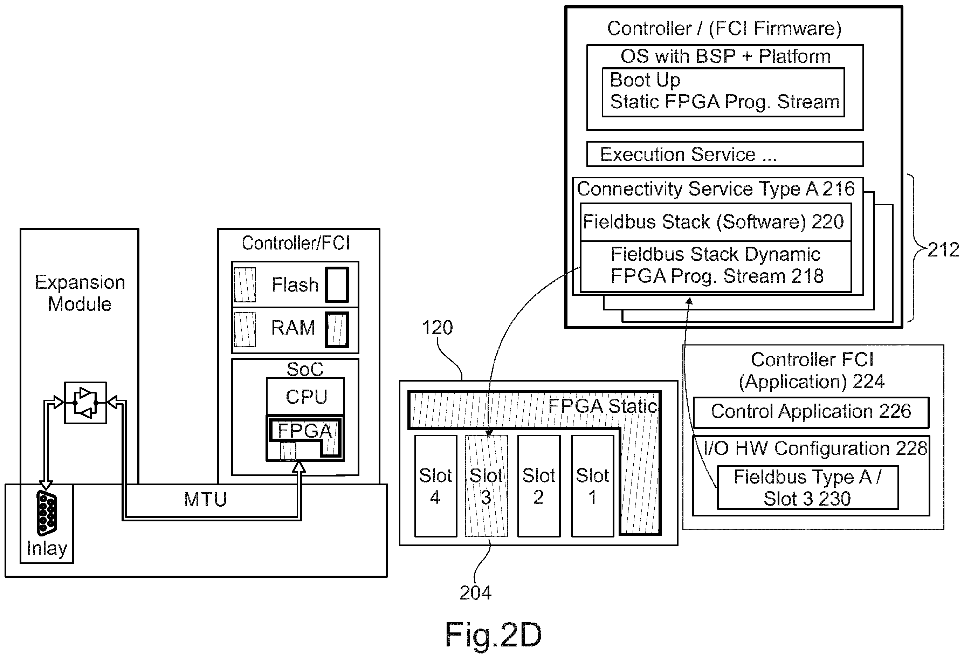

As shown in FIG. 2D, in conjunction with initialization of the control application 226, one of the dynamic areas 204 of the flexible fieldbus communications interface 120 is programmed with that programming stream 218, retrieved from the library 212, which corresponds to the requested fieldbus type 230, while the corresponding fieldbus stack software 220 is also enabled for use. The dynamic areas 204 of the flexible fieldbus communications interface 120 can be programmed and changed in this way during runtime, for example in response to changing fieldbus connectivity requirements.

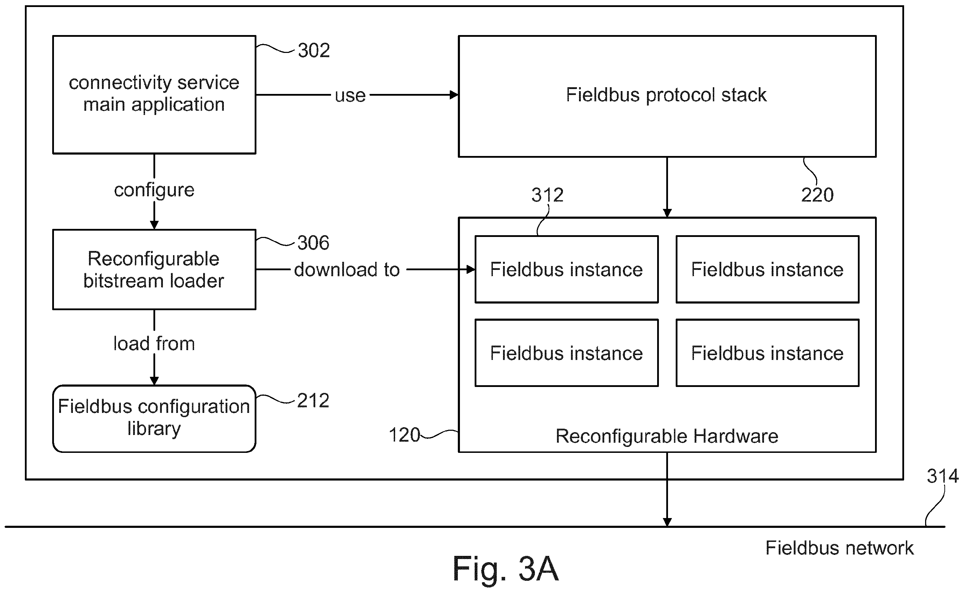

FIGS. 3A-C provide a further illustration of the programming of the flexible fieldbus communications interface 120, so as to provide multiple fieldbus connectivity services according to the present disclosure.

As shown in FIG. 3A, the connectivity service main application 302 configures a reconfigurable bitstream loader 306 to load a connectivity service 216 from the library212, based on the required interface configuration 228.The reconfigurable bitstream loader 306 downloads the programming stream 218 from the loaded connectivity service 216 to the flexible fieldbus communications interface 120 so as to create a fieldbus instance 312 that is associated with the loaded connectivity service. Meanwhile, the connectivity service main application 302 uses the fieldbus stack software 220 from the connectivity service 216 loaded from the library 212 to send signals to, and receive signals from, the one or more field devices connected to the fieldbus network 314. The fieldbus stack software 220 in turn uses the communications interface provided by the flexible fieldbus communications interface 120, configured using one or more selected fieldbus instances 312, to satisfy fieldbus connectivity requirements of the one or more field devices.

In the example illustrated, the flexible fieldbus communications interface 120, by virtue of its comprising a plurality of logic gates, is able to host multiple fieldbus instances 312 at the same time. Since a single field device can support multiple different fieldbus protocols, the reconfigurable bitstream loader 306 may instantiate multiple fieldbus instances 312 corresponding to the multiple fieldbus protocols supported by the field device, according to the required interface configuration 228. The connectivity service main application 302 may be configured to monitor the network to obtain new or changed fieldbus connectivity requirements. In one example, to conserve hardware resources, only those fieldbus instances 312 required for current use may be instantiated. Subsequently, the connectivity service main application 302 may instruct reconfiguration of the flexible fieldbus communications interface 120 in response to changes in the fieldbus connectivity requirements.

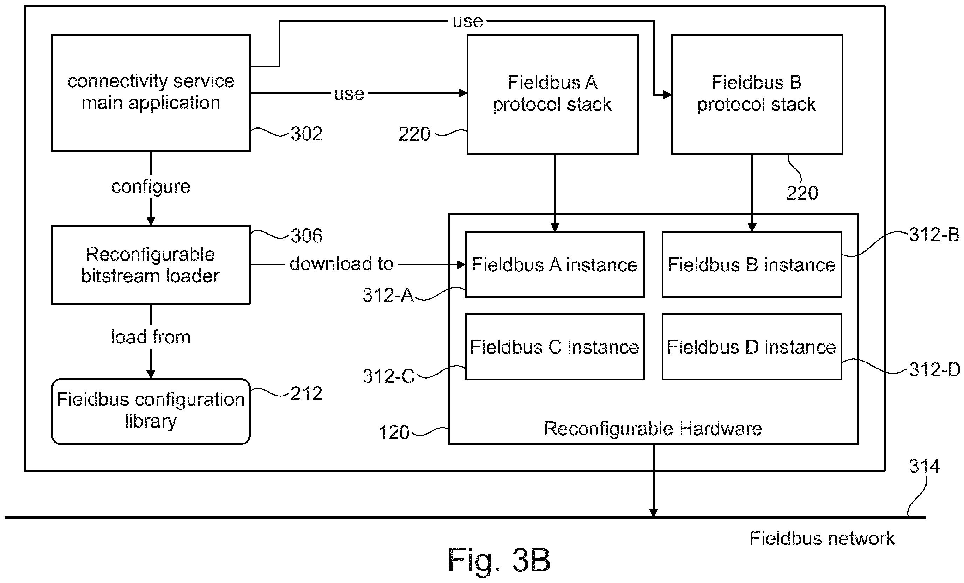

FIG. 3B illustrates the flexible fieldbus communications interface 120 being configured using different fieldbus instances 312-A, 312-B, 312-C, 312-D, which provide various connectivity services selected from PROFIBUS, MODBUS, PROFINET, MODBUS TCP, FF HSE, OPC UA, and so on. In this example, the connectivity service main application 302 uses different fieldbus protocol stacks 220-A and 220-B to make use of the different fieldbus instances. The reconfigurable bitstream loader 306 instantiates the different fieldbus instances 312-A, 312-B, 312-C, 312-D according to the required interface configuration 228. The fieldbus instances can be changed in response to changes in the fieldbus connectivity requirements of the field devices. During reconfiguration, the connectivity service main application 302 first obtains a new or revised required interface configuration 228. The connectivity service main application 302 then instructs the reconfigurable bitstream loader 306 to load the appropriate connectivity service definitions 216 from the library 212. The reconfigurable bitstream loader 306 instantiates the corresponding fieldbus instances in the flexible fieldbus communications interface 120, which are used by the connectivity service main application 302, in conjunction with the matching fieldbus protocol stack 220-A or 220-B, to communicate with the one or more field devices. For example, when the factory owner updates a field device from fieldbus protocol A to fieldbus protocol B, the connectivity service main application 302 receives notification of the change in the required interface configuration 228, and instructs the loader 306 to swap out the fieldbus A instance 312-A and swap in the fieldbus B instance 312-B. The controller 102 is then able to communicate with the updated field device using fieldbus protocol B without any hardware changes.

In this way, the process control system 100 is readily able to support different fieldbus protocols during the hardware lifecycle. For example, the process control system 100 may initially be configured with legacy fieldbus instances to support brownfield field devices. When the factory owner upgrades the field devices, the flexible fieldbus communications interface 120 can be reconfigured with new fieldbus instances. For example, PROFIBUS is widely used in process automation, while PROFINET is an ethernet upgrade to PROFIBUS. If the factory owner upgrades a field device from PROFIBUS to PROFINET, the flexible fieldbus communications interface 120 may readily be reconfigured using the appropriate fieldbus instance and the corresponding fieldbus protocol stack may be selected to support the new protocol. In this way, the flexible fieldbus communications interface 120 may be viewed as a universal fieldbus connectivity device for various fieldbus protocols, since the same hardware can be used when reconfigured with the correct fieldbus instances, thereby reducing costs, increasing scalability, and overcoming compatibility issues.

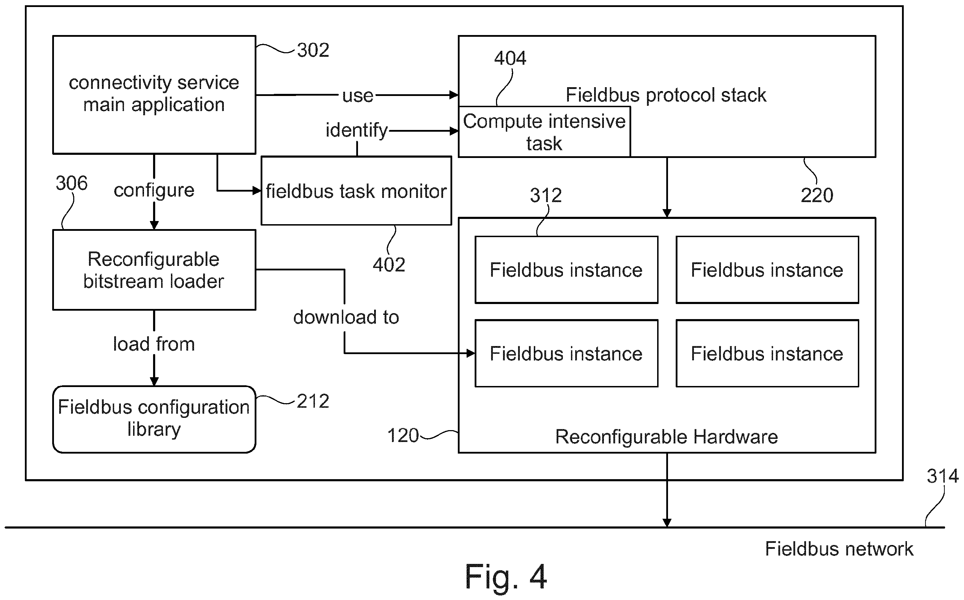

FIG. 4 depicts the flexible fieldbus communications interface 120 being used to expedite compute tasks. In this example, the flexible fieldbus communications interface 120 further comprises a fieldbus task monitor 402 which monitors the fieldbus protocol stack 220 to identify at least one compute-intensive task 404. For example, the fieldbus protocol stack 220 may contain a hot path in which the compute-intensive task 404 occupies a lot of compute and memory resources (e.g., exceeding one or more predetermined thresholds).

The connectivity service main application 302 receives the indication from the fieldbus task monitor 402 and uses it to formulate the configure instruction which is sent to the reconfigurable bitstream loader 306. The fieldbus configuration library 212 in this example further stores a pre-compiled hardware configuration corresponding to the at least one compute-intensive task 404. The hardware configuration may comprise pre-compiled parallel executable register transfer level logic, for example. The reconfigurable bitstream loader 306 loads the hardware configuration from the fieldbus configuration library 212 and downloads it to the flexible fieldbus communications interface 120, in the form of a task bitstream.

In this way, the compute-intensive tasks 404 can be offloaded from the fieldbus protocol stack 220 to the flexible fieldbus communications interface 120. Whereas the fieldbus protocol stack 220 executes tasks in software, the flexible fieldbus communications interface 120 executes the compute-intensive tasks 404 in hardware, thereby improving throughput and reducing energy consumption.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method of providing fieldbus connectivity, the method comprising, by a network device for an industrial automation system:
obtaining fieldbus connectivity requirements specifying a required fieldbus protocol type using which the network device is to communicate;
loading, from a library, a fieldbus connectivity service, wherein the fieldbus connectivity service comprises fieldbus stack software and a fieldbus stack hardware configuration for implementing a protocol stack which conforms to the required fieldbus protocol type;
using the fieldbus stack hardware configuration to carry out partial reconfiguration of a flexible fieldbus communications interface, wherein the flexible fieldbus communications interface comprises a portion which remains unaltered during the partial reconfiguration;
binding the fieldbus stack software to a portion of the flexible fieldbus communications interface that was partially reconfigured using the fieldbus stack hardware configuration; and
using the protocol stack which conforms to the required fieldbus protocol type to provide fieldbus connectivity at the network device.

2. The method of claim 1, wherein the fieldbus connectivity service is a first fieldbus connectivity service, the method further comprising reconfiguring a second portion of the flexible fieldbus communications interface to provide a second service independently of the first fieldbus connectivity service.

3. The method of claim 2, wherein the second service comprises a second fieldbus connectivity service, whereby the network device provides multiple independent fieldbus connectivity services.

4. The method of claim 3, wherein the multiple fieldbus connectivity services conform to the same fieldbus protocol type.

5. The method of claim 3, wherein the multiple fieldbus connectivity services conform to different fieldbus protocol types.

6. The method of any preceding claim, wherein the fieldbus stack hardware configuration comprises a programming stream for programming the one of the dynamic areas of the flexible fieldbus communications interface.

7. The method of any preceding claim, wherein the second service executes one or more compute tasks.

8. The method of claim 7, wherein the compute tasks are related to the fieldbus stack software of the fieldbus connectivity service.

9. The method of any preceding claim, wherein the portion which remains unaltered during the partial reconfiguration is a static portion, the method further comprising programming the static portion of the flexible fieldbus communications interface.

10. The method of any preceding claim, further comprising:
obtaining updated fieldbus connectivity requirements specifying a replacement fieldbus protocol type which is different to the previously required fieldbus protocol type;
loading, from the library, a replacement fieldbus connectivity service which conforms to the replacement fieldbus protocol type;
using a hardware configuration of the replacement fieldbus connectivity service to carry out partial reconfiguration of the flexible fieldbus communications interface;
binding fieldbus stack software of the replacement fieldbus connectivity service to a portion of the dynamic areas of the flexible fieldbus communications interface that was partially reconfigured using the replacement fieldbus stack hardware configuration; and
using the protocol stack which conforms to the replacement fieldbus protocol type to provide fieldbus connectivity at the network device.

11. The method of any preceding, wherein partial reconfiguration of the flexible fieldbus communications interface performed in relation to at least one reconfigurable portion thereof does not impact the function of a static portion thereof or any other reconfigurable portion thereof.

12. A network device for an industrial automation system, the network device being configured to perform the method of providing fieldbus connectivity according to any preceding claim.

13. A computer-readable medium comprising instructions which, when executed by a computing system, cause the computing system to perform the method of any of claims 1-11.
